# EUROPÄISCHE PATENTSCHRIFT

(11) **EP 2 528 775 B1**
(45) Veröffentlichungstag und Bekanntmachung des Hinweises auf die Patenterteilung: **18.03.2015**
(21) Anmeldenummer: 11701368.0
(22) Anmeldetag: 17.01.2011
(51) Int. Cl.: B60Q 1/48, B62D 15/02, B62D 1/28

(54) **VERFAHREN ZUR UNTERSTÜTZUNG EINES FAHRERS EINES KRAFTFAHRZEUGS**
METHOD FOR ASSISTING A DRIVER OF A MOTOR VEHICLE
PROCÉDÉ D'ASSISTANCE AU CONDUCTEUR D'UN VÉHICULE AUTOMOBILE

(30) Priorität: 29.01.2010 DE 102010001368
(43) Veröffentlichungstag der Anmeldung: 05.12.2012
(73) Patentinhaber: Robert Bosch GmbH, 70442 Stuttgart (DE)
(72) Erfinder: STAACK, Jochen, 70178 Stuttgart (DE); BECKER, Markus, 71732 Tamm (DE)
(86) Internationale Anmeldenummer: PCT/EP2011/050501
(87) Internationale Veröffentlichungsnummer: WO 2011/092063

(56) Entgegenhaltungen:
- EP-A2- 1 626 384
- EP-A2- 1 864 889
- EP-A2- 1 867 557
- EP-A2- 2 050 640
- DE-A1-102006 048 910
- US-A1- 2005 264 099

## Beschreibung

### Stand der Technik

Die Erfindung geht aus von einem Verfahren zur Unterstützung eines Fahrers eines Kraftfahrzeugs bei einem Fahrmanöver gemäß dem Oberbegriff des Anspruchs 1.

Verfahren zur Unterstützung eines Fahrers eines Kraftfahrzeuges umfassen insbesondere solche Verfahren, die den Fahrer bei komplexen Rangiermanövern, beispielsweise beim Einparken in eine Parklücke unterstützen. Das Einparken in eine Parklücke kann dabei entweder vorwärts oder rückwärts erfolgen. Üblicherweise werden Rückwärtsparkvorgänge unterstützt.

Bei Systemen, die den Fahrer bei Fahrmanövern unterstützen, wird unterschieden in solche, die dem Fahrer lediglich den Abstand zu Objekten in der Umgebung des Fahrzeugs anzeigen, wobei die Anzeige im Allgemeinen optisch und/oder akustisch erfolgt, und solche Systeme, die dem Fahrer entweder notwendige Eingriffe anzeigen oder auch die Lenkung selbsttätig übernehmen. Zusätzlich kann auch die Längsführung übernommen werden.

Auch bei Systemen, bei denen die Lenkung und gegebenenfalls zusätzlich die Längsführung vom Assistenzsystem übernommen werden, ist es vorteilhaft, dem Fahrer Abstände zu Objekten in der Umgebung des Fahrzeugs anzuzeigen. Die Anzeige erfolgt dabei üblicherweise akustisch durch repetierende Signaltöne, wobei die Pause zwischen zwei Tönen mit abnehmendem Abstand zu einem Objekt ebenfalls abnimmt. Bei Unterschreiten eines vorgegebenen Mindestabstandes ertönt ein Dauerton, der den Fahrer dazu auffordert, das Fahrzeug anzuhalten. Alternativ oder zusätzlich kann auch eine optische Anzeige zum Beispiel mit Hilfe von LEDs erfolgen. Hierbei nimmt üblicherweise die Anzahl an aufleuchtenden LEDs mit abnehmendem Abstand zu. Bei Unterschreiten eines vorgegebenen Abstandes ist es weiterhin möglich, auch andersfarbige LEDs einzusetzen. Neben der Anzeige mit LEDs ist auch eine zweidimensionale Darstellung in Draufsicht auf einer Anzeigeeinheit eines Bordcomputers, beispielsweise einem Monitor, möglich.

Um einen automatischen Lenkeingriff nur dann auszuführen, wenn alle Systeme des Fahrassistenzsystems bereit sind, ist wie aus DE-A 10 2005 017 359 bekannt, zunächst zu überprüfen, ob das Steuergerät des Einparkassistenzsystems keinen Fehler meldet, das Steuergerät des Lenkaktuators keinen Fehler meldet und die Kommunikation zwischen den beiden Steuergeräten keinen Fehler aufweist. Sobald nicht alle Bedingungen erfüllt sind, wird kein automatischer Lenkeingriff ausgeführt. Dies hat jedoch den Nachteil, dass bei einem Fehler in einem Gerät die Unterstützung für den Fahrer vollkommen wegfällt. Dem Fahrer ist somit keine Hilfe mehr bei einem Fahrmanöver gegeben.

In der Schrift EP 2050640 A2 wird eine Steuervorrichtung und ein Verfahren zur Einparkunterstützung beschrieben, wobei eine Umgebung des Fahrzeugs erfasst wird und ein Einparkweg des Fahrzeugs in eine Parklücke berechnet wird. Bei Erfassung eines Hindernisses auf dem Einparkweg in die Parklücke wird das Fahrzeug verzögert. Für den Fall, dass das Hindernis nicht mehr erfasst wird, wird ein Hinweis auf ein mögliches Fortsetzen des Einparkvorgangs ausgegeben.

Der nächstliegende Stand der Technik ist in der EP 2050640 A2 zu sehen.

### Offenbarung der Erfindung

### Vorteile der Erfindung

Bei einem erfindungsgemäßen Verfahren zur Unterstützung eines Fahrers eines Kraftfahrzeugs bei einem Fahrmanöver wird zunächst die Umgebung des Fahrzeuges erfasst, anhand der festen Umgebung wird mindestens eine geeignete Trajektorie zur Durchführung des Fahrmanövers berechnet und das Kraftfahrzeug wird automatisch gesteuert, um das Fahrmanöver durchzuführen. Bei einer Störung des Fahrassistenzsystems wird der Fahrer informiert, die automatische Steuerung wird beendet und der Fahrer erhält Hinweise, anhand derer dieser das Fahrmanöver fortsetzen kann. Durch das Informieren des Fahrers, dass eine Störung aufgetreten ist und der Ausgabe von Hinweisen zur Durchführung des weiteren Fahrmanövers, erfolgt kein vollständiger Abbruch, wenn eine Störung detektiert wird. Hierdurch wird es dem Fahrer weiterhin ermöglicht, auf eine Unterstützung bei dem durchzuführenden Fahrmanöver zurückgreifen zu können. Besonders vorteilhaft ist es, wenn lediglich der Teil des Fahrassistenzsystems, der eine Störung verursacht, außer Funktion genommen wird.

Um eine geeignete Trajektorie zur Durchführung des Fahrmanövers berechnen zu können, ist es notwendig, die Umgebung des Kraftfahrzeugs zu erfassen. Die Erfassung der Umgebung des Kraftfahrzeugs erfolgt dabei im Allgemeinen durch den Einsatz von geeigneten Abstandssensoren. Als Abstandssensoren eignen sich zum Beispiel Ultraschallsensoren, Infrarotsensoren, Radarsensoren, LIDAR-Sensoren oder auch kapazitive Sensoren. Neben den vorstehend genannten Sensoren kann eine Erfassung der Umgebung auch über videobasierte Sensoren, beispielsweise eine Kamera mit geeigneter Bildverarbeitung, erfasst werden. Wenn das Fahrmanöver ein Einparkvorgang ist, so wird im Allgemeinen mit einem seitlich am Fahrzeug angebrachten Abstandssensor während der Vorbeifahrt die Distanz zu Objekten neben dem Fahrzeug gemessen. Anhand des ermittelten Signalverlaufs wird erkannt, ob und an welcher Stelle eine geeignete Parklücke vorhanden ist. Da die Parklücke während der Vorbeifahrt des Fahrzeugs erfasst wird und die Vorbeifahrt üblicherweise vorwärts erfolgt, ist der erste Fahrzug in die Parklücke im Allgemeinen ein Rückwärtszug. Aus den so erfassten Daten der Umgebung kann mit Hilfe eines geeigneten Steuergerätes eine Trajektorie berechnet werden, entlang der das Fahrmanöver durchgeführt wird. Wenn bei einem Einparkvorgang ein Einparken in einem Zug nicht möglich ist, ist es auch möglich, dass direkt mehrere Trajektorien berechnet werden, entlang denen das Fahrzeug in die Parklücke eingeparkt werden kann. Dies ist zum Beispiel bei einer engen Umgebung oder bei einer kurzen Parklücke erforderlich. Bevorzugt ist es jedoch, wenn ein einzügiges Einparken durchgeführt werden kann.

Um das Fahrmanöver durchzuführen, umfasst die automatische Steuerung in einer ersten Ausführungsform ein automatisches Lenken des Kraftfahrzeugs. In diesem Fall wird der Lenkeingriff vom Fahrassistenzsystem übernommen und der Fahrer braucht nur noch die Längsführung übernehmen. Das bedeutet, dass der Fahrer lediglich das Fahrpedal und die Bremse des Kraftfahrzeugs betätigen muss, um das Fahrzeug entsprechend zu beschleunigen, abzubremsen oder die Geschwindigkeit des Fahrzeugs zu halten. Zur Unterstützung des Fahrers beim Durchführen der Längsführung ist es weiterhin vorteilhaft, wenn Abstände zu Objekten in der Umgebung des Fahrzeugs während des Fahrmanövers kontinuierlich erfasst werden und die Abstände dem Fahrer angezeigt werden. Hierdurch kann der Fahrer das Fahrzeug rechtzeitig zum Stillstand bringen. Auch wenn ein Abbremsen des Fahrzeuges am Ende einer zu durchfahrenden Trajektorie für das Fahrmanöver erforderlich ist, insbesondere wenn ein mehrzügiges Fahrmanöver durchgeführt wird, werden dem Fahrer ebenfalls Hinweise zur Längsführung, insbesondere zum Anhalten des Fahrzeugs, gegeben.

In einer weiteren Ausführungsform umfasst die automatische Steuerung neben dem automatischen Lenken auch eine automatische Längsführung des Kraftfahrzeugs. Die automatische Längsführung kann dabei zum Beispiel eine vollautomatische Längsführung bedeuten, d.h., dass die gesamte Längsführung vom Fahrassistenzsystem übernommen wird. In diesem Fall fällt dem Fahrer lediglich eine überwachende Aufgabe zu. Das Fahrzeug beschleunigt selbsttätig, hält die Geschwindigkeit und bremst auch selbsttätig ab. In einer alternativen Ausführungsform umfasst die automatische Längsführung nur ein automatisches Abbremsen. Um die Längsführung durchzuführen ist es in diesem Fall zum Beispiel notwendig, dass der Fahrer das Fahrpedal betätigt, um die jeweils notwendige Geschwindigkeit des Fahrzeugs zu halten. Wenn jeweils ein Endpunkt einer Trajektorie erreicht ist, wird ein automatischer Bremsvorgang durchgeführt. Bei einer kontinuierlichen Erfassung der Umgebung wird ebenfalls ein automatischer Bremsvorgang durchgeführt, wenn sich das Fahrzeug einem Objekt bis auf einen vorgegebenen Mindestabstand nähert. Um zum Beispiel bei Auftreten eines bewegten Objektes, beispielsweise eines Fußgängers oder eines Radfahrers, eine Kollision zu vermeiden ist es weiterhin vorteilhaft, wenn der Fahrer das automatische Fahrassistenzsystem übersteuern kann. So wird das Fahrzeug zum Beispiel immer angehalten, wenn der Fahrer die Bremse des Fahrzeugs betätigt. Nach dem Lösen der Bremse kann dann die automatische Steuerung übernommen werden. Um einen automatischen Lenkeingriff zu ermöglichen, ist zum Beispiel ein geeigneter Stellmotor vorgesehen, mit dem die lenkbaren Räder und gegebenenfalls auch das Lenkrad des Fahrzeuges bewegt werden können. Alternativ können auch für die lenkbaren Räder und das Lenkrad jeweils separate Stellmotoren vorgesehen sein. Die Ansteuerung der Stellmotoren erfolgt dabei über ein geeignetes Steuergerät, das vom Fahrassistenzsystem angesteuert wird oder das vom Fahrassistenzsystem umfasst ist. Um eine automatische Längsführung zu ermöglichen, ist es zum Beispiel möglich, einen Bremseingriff durch Bremsanweisungen vom Steuergerät des Fahrassistenzsystems an ein ESP-System zu übermitteln. Dies kann zum Beispiel über ein CAN-Netzwerk erfolgen. Entsprechend können auch Anweisungen zur Beschleunigung des Fahrzeugs oder zum Halten der Geschwindigkeit an das ESP-System bzw. ein anderes geeignetes Steuersystem zum Beschleunigen des Fahrzeugs übermittelt werden.

Erfindungsgemäß wird bei einer Störung der Fahrer des Kraftfahrzeugs informiert. Die Störung kann dabei zum Beispiel Störungen am Lenksystem oder am Bremssystem des Kraftfahrzeugs umfassen. Eine solche Störung ist zum Beispiel der Ausfall eines Stellmotors für die automatische Lenkung oder aber auch Störungen bei der Datenübertragung zum Beispiel an das Steuergerät für die Stellmotoren der automatischen Lenkung oder auch an das ESP-System des Fahrzeugs. Um eine solche Störung festzustellen ist es zum Beispiel möglich, dass vom Steuergerät des Fahrassistenzsystems jeweils eine Antwort des ESP-Systems oder der Steuerung der Stellmotoren für die Lenkung abgewartet wird. Bei Ausbleiben der Antwort oder einer fehlerhaften Antwort wird auf eine Störung geschlossen.

Sobald eine entsprechende Störung festgestellt wird, wird der Fahrer des Kraftfahrzeugs informiert. Zusätzlich erfolgt eine Beendigung der automatischen Steuerung. Das Beenden der automatischen Steuerung kann dem Fahrer zum Beispiel optisch und/oder akustisch und/oder haptisch angezeigt werden. Die Information über eine Störung und die Anzeige der Beendigung der automatischen Steuerung kann dabei gleichzeitig über das gleiche System erfolgen oder aber über separate Anzeigen. So ist es zum Beispiel möglich, den Fahrer über eine optische Anzeige, beispielsweise einen Hinweis auf eine Anzeigevorrichtung des Bordcomputers auf eine Störung hinzuweisen und dem Fahrer gleichzeitig die automatische Beendigung der Steuerung haptisch anzuzeigen. Ein haptische Anzeige erfolgt zum Beispiel dadurch, dass eine Vibration auf das Lenkrad aufgeprägt wird, da der Fahrer jedoch bei einem automatisch gelenkten Fahrmanöver das Lenkrad nicht anfassen wird, kann eine haptische Anzeige zum Beispiel auch durch Vibration des Fahrersitzes erfolgen. Auf diese Weise wird die Aufmerksamkeit des Fahrers geweckt und dem Fahrer angezeigt, dass etwas nicht in Ordnung ist. Bei einer optischen Anzeige ist es zum Beispiel möglich, auf einer Anzeige des Bordcomputers die zu befahrene Trajektorie anzuzeigen und die tatsächlich gefahrene Trajektorie ebenfalls einzublenden. Sobald eine Abweichung zwischen berechneter Trajektorie und tatsächlicher Trajektorie auftaucht, kann der Fahrer ersehen, dass es Probleme mit der automatischen Steuerung des Fahrzeugs gibt. Um die Aufmerksamkeit auf die Anzeige zu richten, kann gleichzeitig auch ein Warnton, ein beliebiges anderes Warnsignal oder auch eine Sprachausgabe, die den Fahrer auf die Störung hinweist, erfolgen.

Um dem Fahrer bei einer Störung weiterhin Unterstützung beim Fahrmanöver zu geben ist es bevorzugt, wenn nach dem Beendigen der automatischen Steuerung dem Fahrer notwendige Hinweise zum Beispiel die erforderlichen Lenkbewegungen, um die berechnete Trajektorie zu befahren, angezeigt werden. In diesem Fall kann der Fahrer sich nach den Hinweisen richten, um die berechnete Trajektorie zu befahren und das Fahrmanöver zu beenden. Wenn auch bei der Anzeige der notwendigen Lenkbewegungen Fehler auftreten, die seitens des Fahrassistenzsystems bemerkt werden, ist es weiterhin vorteilhaft, dem Fahrer keine weiteren Hinweise zu notwendigen Lenkbewegungen zu geben, den Fahrer jedoch weiterhin über Abstände zu Objekten in der Umgebung des Kraftfahrzeugs zu informieren.

Im Allgemeinen wird es jedoch möglich sein, dem Fahrer notwendige Lenkhinweise zum Befahren der berechneten Trajektorie zu geben, so dass bei Ausfall der automatischen Steuerung die notwendigen Lenkhinweise weiterhin gegeben werden können.

Wenn die Steuerung weiter funktioniert, jedoch Probleme am Bremssystem auftreten, so dass der Fahrer die Längsführung übernehmen muss, ist es insbesondere vorteilhaft, wenn auch in diesem Fall die automatischen Lenkeingriffe beendet werden und der Fahrer auch die Lenkung des Fahrzeuges übernehmen muss. Hierdurch erhält der Fahrer des Kraftfahrzeugs einen klaren Hinweis darauf, dass er sein gewohntes Fahrassistenzsystem nicht zur Verfügung hat. Aufgrund der Übernahme der Lenkung wird er auch daran erinnert, dass das Fahrzeug nicht selbsttätig bremst. Dem Fahrer wird somit deutlich gemacht, dass er für Lenkeingriffe und Längsführung des Fahrzeuges selbsttätig verantwortlich ist, auch wenn dem Fahrer die notwendigen Hinweise zur Lenkung des Fahrzeuges weiterhin gegeben werden.

Das Fahrmanöver, bei dem der Fahrer unterstützt wird, ist insbesondere ein Einparkmanöver in eine Querparklücke oder in eine Längsparklücke. Das Fahrmanöver kann jedoch auch zum Beispiel ein Fahrmanöver in engen Straßen, Parkhäusern oder auch auf Parkplätzen umfassen. Üblicherweise ist das Fahrmanöver jedoch ein Einparkmanöver in eine Querparklücke oder in eine Längsparklücke. Um die mindestens eine geeignete Trajektorie zur Durchführung des Fahrmanövers berechnen zu können, ist es vorteilhaft, zur Erfassung der Umgebung des Kraftfahrzeugs den Abstand zu Objekten in der Umgebung des Kraftfahrzeugs zu erfassen und aus den erfassten Abständen zu Objekten in der Umgebung des Kraftfahrzeugs eine Umgebungskarte zu erstellen. Insbesondere ist es bevorzugt, wenn dem Fahrer die Umgebungskarte, die aus den erfassten Abständen zu Objekten erstellt wurde, samt der Position des Kraftfahrzeugs dargestellt wird. Auf diese Weise erhält der Fahrer des Kraftfahrzeugs eine zusätzliche Information über das geplante Fahrmanöver und kann so das Fahrmanöver besser überwachen. Insbesondere kann dem Fahrer des Kraftfahrzeugs auf diese Weise einfach dargestellt werden, wenn Abweichungen zwischen dem geplanten Fahrmanöver und dem tatsächlich durchgeführten Fahrmanöver auftreten, die zum Beispiel auf Störungen hinweisen. Auch kann auf diese Weise ein konkreter Hinweis zu einer Störung erfolgen.

Um dem Fahrer das geplante Fahrmanöver darstellen zu können, ist es weiterhin bevorzugt, wenn die mindestens eine Trajektorie zur Durchführung des Fahrmanövers in der Umgebungskarte angezeigt wird. Durch die Anzeige der Trajektorie in der Umgebungskarte werden überraschende Fahrzüge vermieden, da der Fahrer das geplante Fahrmanöver nachvollziehen kann. Weiterhin können auf einfache Weise notwendige Lenkeingriffe angezeigt werden, wenn eine Störung auftritt und der Fahrer die Lenkung selber übernehmen muss.

Um das Fahrmanöver nachvollziehen zu können beziehungsweise zur Überprüfung, ob die vom System ermittelte Umgebungskarte mit der tatsächlichen Umgebung übereinstimmt, ist es weiterhin vorteilhaft, wenn dem Fahrer die Position des Kraftfahrzeugs auf der Trajektorie angezeigt wird. Durch die Anzeige des Kraftfahrzeugs auf der Trajektorie werden dem Fahrer auch gleichzeitig Abweichungen zwischen der berechneten Trajektorie und der tatsächlich gefahrenen Strecke angezeigt. Auch hierdurch ist eine Anzeige von Störungen möglich.

### Kurze Beschreibung der Zeichnungen

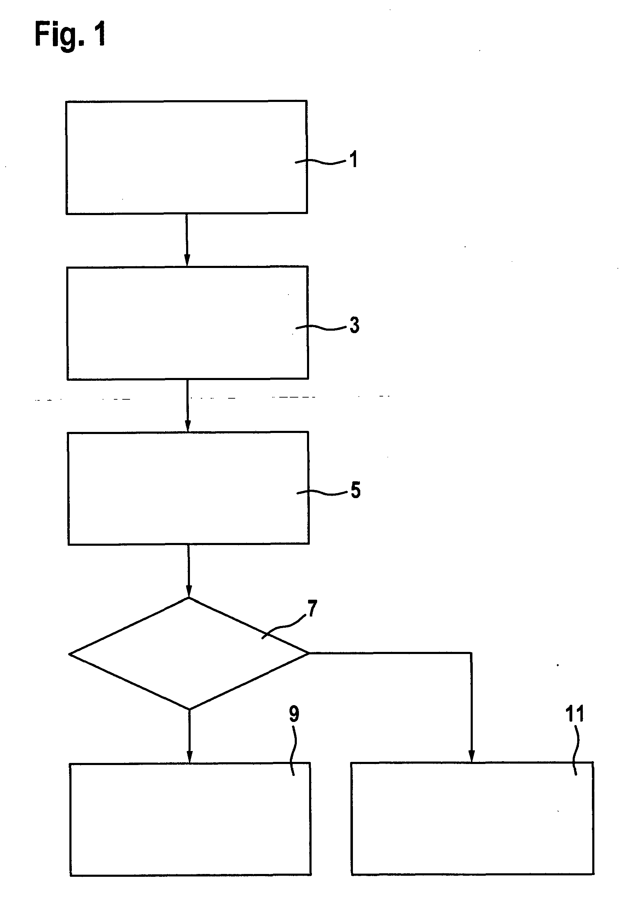

Ein Ausführungsbeispiel der Erfindung ist in der Figur dargestellt und wird in der nachfolgenden Beschreibung näher erläutert.

Die einzige Figur zeigt ein Flussdiagramm des erfindungsgemäßen Verfahrens.

### Ausführungsbeispiel der Erfindung

Um bei einem Fahrmanöver unterstützt zu werden, wird in einem ersten Schritt 1 von einem Fahrer eines Kraftfahrzeugs ein Fahrassistenzsystem aktiviert. Das Fahrassistenzsystem ist zum Beispiel ein Einparkassistenzsystem, das den Fahrer beim Einparken in eine Parallelparklücke oder in eine Querparklücke unterstützt. Zur Unterstützung des Fahrers beim Einparken in eine Parklücke werden vom Einparkassistenzsystem notwendige Lenkeinstellungen zum Einstellen in die Parklücke übernommen. In einer alternativen Ausführungsform wird neben den notwendigen Lenkeinstellungen auch die Längsführung des Fahrzeugs vom Einparkassistenzsystem gesteuert. Um die Lenkeinstellungen zum Einparken des Fahrzeugs in die Parklücke übernehmen zu können, ist es notwendig, zunächst eine geeignete Parklücke zu finden. Hierzu wird in einem zweiten Schritt 3 die Umgebung des Kraftfahrzeugs während der Vorbeifahrt an potentiellen Parklücken erfasst. Anhand der erfassten Umgebung kann vom Einparkassistenzsystem ermittelt werden, ob eine geeignete Parklücke vorliegt. Eine geeignete Parklücke liegt insbesondere dann vor, wenn der Abstand zwischen zwei die Lücke begrenzenden Objekten ausreichend groß ist, um das Fahrzeug einparken zu können.

Sobald eine Parklücke detektiert worden ist, wird dies dem Fahrer signalisiert. Wenn der Fahrer in die Parklücke einparken möchte, hält dieser an und übergibt die Steuerung an das Einparkassistenzsystem. Die Übergabe der Steuerung an das Einparkassistenzsystem kann zum Beispiel durch Betätigen eines Schalters erfolgen. Auch jede beliebige andere Möglichkeit, dem Einparkassistenzsystem zu signalisieren, dass dieses die Steuerung übernehmen soll, ist möglich.

Die Übergabe der Steuerung bedeutet, dass vom Einparkassistenzsystem die Lenkung des Fahrzeugs übernommen wird. In einer alternativen Ausführungsform wird zusätzlich vom Einparkassistenzsystem auch die Längsführung des Fahrzeugs übernommen. Die Übernahme der Lenkung und gegebenenfalls der Längsführung des Fahrzeugs erfolgt in einem dritten Schritt 5.

Um das Fahrzeug in die Parklücke steuern zu können bzw. das Parkmanöver durchführen zu können, wird zunächst eine Trajektorie berechnet. Das Fahrzeug wird dann entlang der Trajektorie bewegt.

Während der automatischen Steuerung des Fahrzeugs wird regelmäßig überprüft, ob alle Systeme einwandfrei arbeiten oder ob eine Störung auftritt. Dies erfolgt in einem vierten Schritt 7.

Eine Störung, die auftreten kann, sind zum Beispiel Komplikationen am Bremssystem oder mit der automatischen Lenkung des Fahrzeugs. Hierbei kann es sich zum Beispiel um den Ausfall von Komponenten oder auch um Probleme bei der Datenübertragung handeln.

Wenn keine Störungen festgestellt werden, wird die automatische Steuerung in einem fünften Schritt 9 fortgesetzt. Wenn Störungen auftreten, wird der Fahrer des Kraftfahrzeugs in einem sechsten Schritt 11 informiert. Gleichzeitig wird die automatische Steuerung beendet und der Fahrer erhält Hinweise, anhand derer dieser das Fahrmanöver fortsetzen kann.

Die Hinweise, die der Fahrer erhält, sind zum Beispiel Anzeigen, wie dieser zu lenken hat, um das Fahrzeug entlang der berechneten Trajektorie zu führen. Auf diese Weise kann der Fahrer selbsttätig das Fahrmanöver, das vom Einparkassistenzsystem vorgesehen war, zu Ende führen. Hierbei erhält der Fahrer weiterhin Hinweise über durchzuführende Manöver, so dass dieser nicht auf sich allein gestellt, das Manöver beenden muss.

Dem Fahrer wird somit durch das erfindungsgemäße Verfahren auch bei Störungen oder Ausfall eine Komponente weiterhin eine Unterstützung beim Fahrmanöver gegeben.

Um insbesondere bei Ausfall der automatischen Längsführung sicherzustellen, dass der Fahrer die Längsführung übernimmt, ist es vorteilhaft, in diesem Fall auch die Lenkung des Fahrzeugs an den Fahrer zu übergeben. Sobald der Fahrer das Fahrzeug selbsttätig lenken muss, wird dieser automatisch auch die Längsführung übernehmen. Insbesondere wird dem Fahrer durch die Übergabe der Lenkung vom System deutlich gezeigt, dass Probleme aufgetreten sind und dass ein Fahrassistenzsystem das geplante Fahrmanöver nicht selbsttätig wie geplant durchführen kann. So wird der Fahrer bei Übergabe sowohl der Lenkung als auch der Längsführung insbesondere daran erinnert, dass das Fahrzeug nicht selbsttätig bremst und er das Bremsen des Fahrzeugs übernehmen muss, um beispielsweise Kollisionen zu vermeiden.

Wenn das Fahrassistenzsystem nur die Lenkung übernimmt, so ist die Längsführung bereits beim Fahrer, so dass bei einer Störung des automatischen Lenksystems der Fahrer zusätzlich zur Längsführung auch die Lenkung des Fahrzeugs übernimmt und nur noch Hinweise zu durchzuführenden Lenkeinstellungen erhält.

Die Hinweise zu notwendigen Lenkeinstellungen können zum Beispiel durch Pfeildarstellungen gegeben werden. In diesem Fall muss der Fahrer zum Beispiel das Lenkrad so lange in Pfeilrichtung drehen, wie der Pfeil aufleuchtet. Alternativ ist es auch möglich, die Lenkhinweise zum Beispiel haptisch zu übermitteln, indem dem Lenkrad ein Moment aufgeprägt wird. In diesem Fall wird dem Fahrer das Gefühl vermittelt, das Fahrzeug in einer Spurwelle zu bewegen. Insbesondere, wenn jedoch Störungen zum Beispiel an Stellmotoren auftreten, so dass dem Lenkrad kein Moment aufgebracht werden kann, ist es vorteilhaft, die notwendigen Lenkbewegungen optisch darzustellen.

Durch die Umstellung von der automatischen Steuerung bei einer Störung oder Ausfall einer Komponente auf eine Unterstützung des Fahrers, bei der dieser über notwendige Lenkeinstellungen informiert wird, wird dem Fahrer auch bei einem Systemfehler, einer Störung oder dem Ausfall einer Komponente weiterhin eine Unterstützung beim Fahrmanöver gewährleistet. Der Fahrer ist somit auch in diesem Fall nicht auf sich alleine angewiesen.

## Patentansprüche

1. Verfahren zur Unterstützung eines Fahrers eines Kraftfahrzeugs bei einem Fahrmanöver, wobei zunächst die Umgebung des Kraftfahrzeugs erfasst wird (3), anhand der erfassten Umgebung mindestens eine geeignete Trajektorie zur Durchführung des Fahrmanövers berechnet wird und das Kraftfahrzeug automatisch gesteuert wird (5), um das Fahrmanöver durchzuführen, **dadurch gekennzeichnet, dass** bei einer Störung des Fahrassistenzsystems der Fahrer informiert wird (11), die automatische Steuerung beendet wird und der Fahrer Hinweise erhält, anhand derer dieser das Fahrmanöver fortsetzen kann.

2. Verfahren gemäß Anspruch 1, **dadurch gekennzeichnet, dass** die automatische Steuerung ein automatisches Lenken des Kraftfahrzeugs umfasst.

3. Verfahren gemäß Anspruch 1, **dadurch gekennzeichnet, dass** die automatische Steuerung ein automatisches Lenken und eine automatische Längsführung des Kraftfahrzeugs umfasst.

4. Verfahren gemäß einem der Ansprüche 1 bis 3, **dadurch gekennzeichnet, dass** die Störung Störungen an dem Lenksystem oder am Bremssystem des Kraftfahrzeugs umfasst.

5. Verfahren gemäß einem der Ansprüche 1 bis 4, **dadurch gekennzeichnet, dass** dem Fahrer das Beenden der automatischen Steuerung optisch und/oder akustisch und/oder haptisch angezeigt wird.

6. Verfahren gemäß einem der Ansprüche 1 bis 5, **dadurch gekennzeichnet, dass** das Fahrmanöver ein Einparkmanöver in eine Querparklücke oder in eine Längsparklücke ist.

7. Verfahren gemäß einem der Ansprüche 1 bis 6, **dadurch gekennzeichnet, dass** zur Erfassung der Umgebung des Kraftfahrzeugs der Abstand zu Objekten in der Umgebung des Kraftfahrzeugs erfasst wird und aus den erfassten Abständen zu Objekten in der Umgebung des Kraftfahrzeugs eine Umgebungskarte erstellt wird.

8. Verfahren gemäß Anspruch 7, **dadurch gekennzeichnet, dass** dem Fahrer die Umgebungskarte, die aus den erfassten Abständen zu Objekten erstellt wurde, samt der Position des Kraftfahrzeugs dargestellt wird.

9. Verfahren gemäß Anspruch 7 oder 8, **dadurch gekennzeichnet, dass** dem Fahrer die mindestens eine Trajektorie zur Durchführung des Fahrmanövers in der Umgebungskarte angezeigt wird.

10. Verfahren gemäß Anspruch 9, **dadurch gekennzeichnet, dass** dem Fahrer die Position des Kraftfahrzeugs auf der Trajektorie angezeigt wird.

## Claims

1. Method for assisting a driver of a motor vehicle during a driving manoeuvre, the environment of the motor vehicle first of all being sensed (3), at least one suitable trajectory for carrying out the driving manoeuvre being calculated using the sensed environment, and the motor vehicle being automatically controlled (5) in order to carry out the driving manoeuvre, **characterized in that**, in the event of a fault in the driving assistance system, the driver is informed (11), the automatic control is ended and the driver receives advice which can be used by the driver to continue the driving manoeuvre.

2. Method according to Claim 1, **characterized in that** the automatic control comprises automatic steering of the motor vehicle.

3. Method according to Claim 1, **characterized in that** the automatic control comprises automatic steering and automatic longitudinal guidance of the motor vehicle.

4. Method according to one of Claims 1 to 3, **characterized in that** the fault comprises faults in the steering system or in the braking system of the motor vehicle.

5. Method according to one of Claims 1 to 4, **characterized in that** the ending of the automatic control is optically and/or acoustically and/or haptically indicated to the driver.

6. Method according to one of Claims 1 to 5, **characterized in that** the driving manoeuvre is a manoeuvre for parking in a bay parking space or a parallel parking space.

7. Method according to one of Claims 1 to 6, **characterized in that**, in order to sense the environment of the motor vehicle, the distance to objects in the environment of the motor vehicle is sensed and a map of the environment is created from the sensed distances to objects in the environment of the motor vehicle.

8. Method according to Claim 7, **characterized in that** the map of the environment which was created from the sensed distances to objects is displayed for the driver together with the position of the motor vehicle.

9. Method according to Claim 7 or 8, **characterized in that** the at least one trajectory for carrying out the driving manoeuvre is indicated to the driver in the map of the environment.

10. Method according to Claim 9, **characterized in that** the position of the motor vehicle on the trajectory is indicated to the driver.

## Revendications

1. Procédé d'assistance d'un conducteur de véhicule automobile lors d'une manoeuvre de conduite, l'environnement du véhicule automobile étant d'abord détecté (3), au moins une trajectoire adaptée étant calculée à l'aide de l'environnement détecté pour exécuter la manoeuvre de conduite et le véhicule automobile étant commandé automatiquement (5) pour réaliser la manoeuvre de conduite, **caractérisé en ce qu'**en cas de panne du système d'aide à la conduite, le conducteur est informé (11) que la commande automatique est arrêtée et que le conducteur reçoit des indications lui permettant de poursuivre la manoeuvre de conduite.

2. Procédé selon la revendication 1, **caractérisé en ce que** la commande automatique comprend une direction automatique du véhicule automobile.

3. Procédé selon la revendication 1, **caractérisé en ce que** la commande automatique comprend une direction automatique et un guidage longitudinal automatique du véhicule automobile.

4. Procédé selon l'une quelconque des revendications 1 à 3, **caractérisé en ce que** la panne comprend des pannes au niveau du système de direction ou du système de freinage du véhicule automobile.

5. Procédé selon l'une quelconque des revendications 1 à 4, **caractérisé en ce que** la fin de la commande automatique est indiquée au conducteur sur le plan visuel et/ou sonore et/ou haptique.

6. Procédé selon l'une quelconque des revendications 1 à 5, **caractérisé en ce que** la manoeuvre de conduite est une manoeuvre de stationnement dans une place de stationnement en épi ou une place de stationnement en longueur.

7. Procédé selon l'une quelconque des revendications 1 à 6, **caractérisé en ce que** la distance par rapport aux objets placés dans l'environnement du véhicule automobile est détectée pour détecter l'environnement du véhicule automobile et qu'une carte de l'environnement est établie à partir des distances détectées par rapport aux objets se trouvant dans l'environnement du véhicule automobile.

8. Procédé selon la revendication 7, **caractérisé en ce que** la carte de l'environnement établie à partir des distances détectées par rapport aux objets est affichée au conducteur, y compris la position du véhicule automobile.

9. Procédé selon la revendication 7 ou 8, **caractérisé en ce que** l'au moins une trajectoire permettant d'exécuter la manoeuvre de conduite est affichée au conducteur dans la carte de l'environnement.

10. Procédé selon la revendication 9, **caractérisé en ce que** la position du véhicule automobile sur la trajectoire est affichée au conducteur.
